# EUROPEAN PATENT SPECIFICATION

(11) **EP 1 003 149 B1**
(45) Date of publication and mention of the grant of the patent: **01.09.2010**
(21) Application number: 99308563.8
(22) Date of filing: 28.10.1999
(51) Int. Cl.: G09G 3/28

(54) **Method for driving a gas-discharge panel**
Verfahren zur Steuerung einer Gasentladungsanzeigevorrichtung
Méthode de commande d'un panneau d'affichage à décharge à gaz

(30) Priority: 20.11.1998 JP 33044798
(43) Date of publication of application: 24.05.2000
(60) Divisional application: 07111007.6
(73) Proprietor: Hitachi Plasma Patent Licensing Co., Ltd., Chiyoda-ku Tokyo (JP)
(72) Inventor: Hashimoto, Yasunobu, Fujitsu Limited, Kawasaki-shi, Kanagawa 211-8588 (JP); Yoneda, Yasushi, Fujitsu Limited, Kawasaki-shi, Kanagawa 211-8588 (JP); Awamoto, Kenji, Fujitsu Limited, Kawasaki-shi, Kanagawa 211-8588 (JP); Iwasa, Seiichi, Fujitsu Limited, Kawasaki-shi, Kanagawa 211-8588 (JP)
(74) Representative: Hitching, Peter Matthew

(56) References cited:
- EP-A- 0 157 248
- EP-A- 0 680 067
- WO-A-97/20301
- US-A- 3 854 072
- US-A- 5 790 087
- US-A- 5 835 072

## Description

### Field of the Invention

The present invention relates to a method for driving a gas-discharge panel such as a plasma display panel (PDP) or a plasma addressed liquid crystal (PALC), and a display device using the gas-discharge panel.

A plasma display panel is coming into wide use as a large screen display device for a television set taking advantage of commercialization of color display. Along with the expansion of the market, requirement for reliability of operation has become more rigorous.

### Description of the prior art

As a color display device, an AC type plasma display panel having three-electrode surface discharging structure is commercialized. This device has a pair of main electrodes for sustaining discharge disposed for each row of matrix display, and an address electrode for each column. Diaphragms for suppressing discharge interference between cells are disposed like a stripe. A discharge space is continuous over the entire length of each column. This AC type plasma display panel utilizes a memory function performed by wall charge on a dielectric layer covering the main electrodes on occasion of displaying. Namely, one pair of main electrodes is assigned to a scanning electrode and the address electrode is assigned to a data electrode for addressing by a line-sequential format for controlling the charging state of each cell corresponding to the display contents. After that, a sustaining voltage (Vs) having alternating polarities is applied to all pairs of the main electrodes simultaneously. Thus, a cell voltage (Vc) that is a sum of the wall voltage (Vw) and the applied voltage can exceed a discharge starting voltage (Vf) only in a cell having a wall voltage above a predetermined quantity, so that the surface discharge occurs along the surface of the substrate for each application of the sustaining voltage. By shortening the period of applying the sustaining voltage, continuous displaying state can be observed.

Concerning a display of sequential images like a television, the addressing and the sustaining are repeated. In general, in order to prevent fluctuations of the display, preparation of addressing is performed for making the charged state uniform over the entire screen, after sustaining of an image and before addressing of the next image.

In the conventional addressing, the charged quantity of the wall charge (wall voltage) is altered by generating the addressing discharge in either the cell to be lighted or the cell not to be lighted. In the writing address format, the wall charge remaining in the display screen is erased as preparation for addressing, and the addressing discharge is generated only in the cell to be lighted, so that an adequate quantity of wall charge is generated in the cell. In the erasing address format, an adequate quantity of wall charge is generated in all cells as preparation of addressing, and then the addressing discharge is generated only in the cell not to be lighted, so that the wall charge in the relevant cell is erased.

WO-A-97/20301 discloses a method of driving a gas discharge panel, the panel having scanning electrodes, corresponding respectively to rows of the panel, and data electrodes, corresponding respectively to columns of the panel, and also having cells arranged respectively at intersections of the scanning electrodes and the data electrodes so as to form a matrix, and a driving period of the panel including an addressing period, in which each of the cells is set selectively either into a to-be-lit state or into a not-to-be-lit state, such state setting being performed by selecting rows one after another in a predetermined scanning sequence using the scanning electrodes corresponding respectively to the rows and, for each such selected row, driving the data electrodes in accordance with state setting data corresponding to the row concerned, said driving period also including a sustain period in which respective display operations are performed simultaneously in all cells that have been set into said to-be-lit state. In this method, a set-up period is provided before the addressing period. During the set-up period slowly ramped waveforms are applied to all the scanning electrodes so that controlled pixel site discharges are achieved. This enables the establishment of standardised wall voltage at each pixel site that are substantially independent of prior existing wall charge states. The slowly ramped waveforms also provide sufficient priming for reliable address discharge operation of the addressed pixel sites. In the addressing period, address discharges are generated only in cells to be lit in the subsequent sustain period.

In the above-mentioned line-sequential addressing, the charge that contributes to the priming effect helping the addressing discharge occur easily is a space charge remaining after generated by the discharge for the preparation of addressing and a space charge generated by addressing discharge in the cell in the upstream side of the row selection (scanning). However, if the cell in the upstream side is not required to generate the addressing discharge (like a cell not to be lighted in the write addressing format), only the space charge remaining after generated at the stage of the preparation for addressing can contribute to the priming effect since the addressing discharge is not generated in the upstream side. Since the space charge decreases along with time passing, the remaining quantity of the space charge will be smaller, as the addressing is coming to an end, so that delay of discharging becomes larger. For this reason, in a cell of a row that is selected at relatively late timing, there was a case where the addressing discharge cannot occur within the row selection period (scanning period for one row) defined by a scan pulse width, resulting in a display defect. An example of the display defect is a "black noise" in which a part or a whole of the upper edge of a belt cannot be lighted, when the belt is displayed in the lower portion of the screen that is scanned vertically. Especially, in the structure in which the discharge space is defined by a diaphragm having a stripe pattern for each column, movement of the space charge generating the priming effect can occur only in each column, resulting in a display defect.

A method for improving the above-mentioned problem is proposed in Japanese Unexamined Patent Publication 9-6280(A), in which a priming discharge for forming the space charge is generated in the row to be selected before applying the scanning pulse that selects the row. The priming discharge is generated in all cells of the row regardless of the display contents, so that the addressing discharge almost surely occurs.

However, in the conventional driving method, since a priming pulse for generating the priming discharge is applied to the next row to be selected at the same time as application of the scanning pulse to the selected row, it is difficult to optimize the pulse width and the peak value, so that the control becomes complicated. In addition, since the pulse width should be set to a little larger for ensuring generation of the priming discharge, the priming pulse should be applied for each row, and the time necessary for the addressing becomes longer. If the timing for applying the pulse is shifted between rows, the row selection period becomes a sum of the priming pulse width and the scanning pulse width, so that the time necessary for the addressing becomes even longer.

### SUMMARY OF THE INVENTION

A method of driving a gas discharge panel embodying a first aspect of the present invention is characterised in that in said addressing period, discharges are generated in all cells of each selected row, irrespective of whether the cells are being set into the to-be-lit state or the not-to-be-lit state; and an intensity of the discharge in each said cell of a selected row in said addressing period is set in accordance with the state setting data corresponding to the row concerned such that the intensities of the discharges in cells of the selected row that are being set into one of the two states are stronger than the intensities of the discharges in cells of the selected row that are being set into the other of the two states.

Such a method can improve the reliability of the addressing while suppressing enlargement of the time necessary for the addressing.

In a driving method embodying the present invention, addressing is carried out to control the state of the cell in accordance with the state setting data such as display data. However, it is not selected whether the addressing discharge is to take place or not, but rather the quantity of addressing discharge (movement of the electric charge) is selected. Namely, a voltage sufficient for generating addressing discharge above the minimum value regardless of the display contents is applied to all of the cells to be addressed. The intensity of the electric discharge depends on the applied voltage.

For example, when the line-sequential addressing is adopted, the space charge that contributes to the priming effect in the row that will be selected next is generated in all of the cells included in the selected row. Therefore, the addressing discharge can be certainly generated for any display pattern by performing the row selection in the order that makes the distance between the nth selected row and the (n+1)th selected row within a predetermined range so that the space charge generated by the addressing discharge becomes effective. If the scanning pulse width is shortened in accordance with increase of the probability of the addressing discharge, the display can be speeded up.

The wall voltage can be varied by the addressing discharge in the addressing of the gas-discharge panel in which each cell is charged by the wall charge. Therefore, the wall voltage (the target value) before change is set so that the wall voltage after change becomes the desired value.

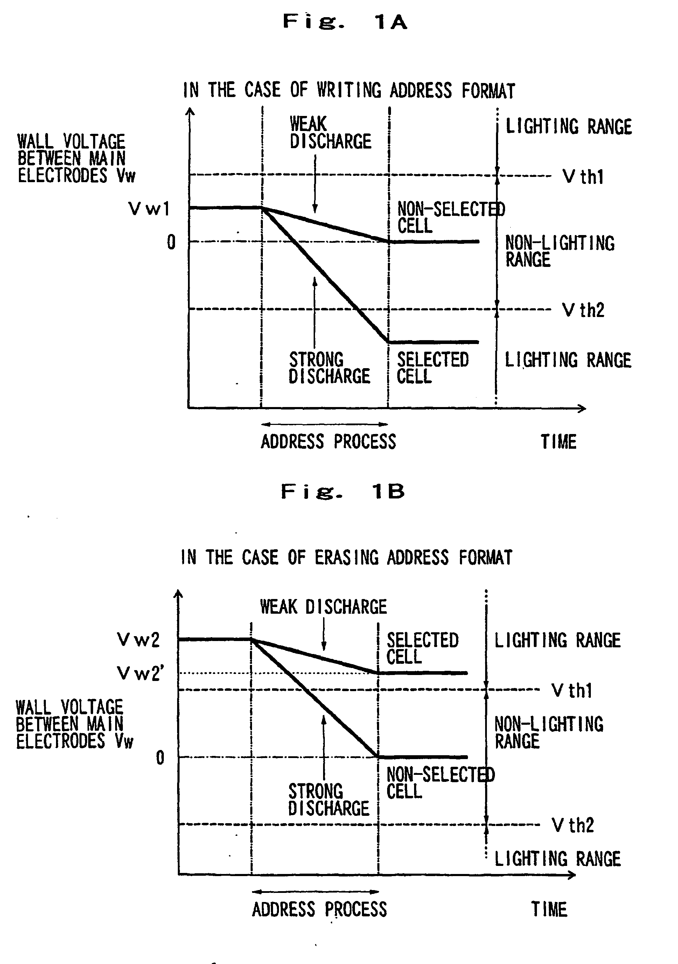

Figs. 1A and 1B show the change in the wall voltage in the addressing of the AC type plasma display panel to which the present invention is applied.

The variation of the wall voltage can be adjusted by setting the intensity of the discharge. However, the variation of the electrode potential will vary either in the direction from a high level to a low level or the opposite direction. Therefore, the combination of lighting or not lighting and the intensity of the discharge includes two patterns as described below.

In the case of writing address format, the wall voltage Vw between main electrodes is set to a value Vw1 within a non-lighting range in which the sustaining discharge cannot be generated as a preprocess of the addressing process. The non-lighting range means a range in which the cell voltage does not exceed the discharge starting voltage even if the sustaining voltage having the same polarity with the wall voltage Vw is applied. The lower limit of the non-lighting range is the threshold value Vth2 having the negative polarity, and the upper limit of the non-lighting range is the threshold value Vth1 having the positive polarity. In the addressing process, a strong addressing discharge is generated for the selected cell (the cell to be lit), and the wall voltage Vw is changed to a value in the lighting range in which the sustaining discharge can be generated in the polarity opposite to the previous polarity. In the non-selected cell (the cell not to be lit), a weak addressing discharge is generated for the priming. In this case, the wall voltage Vw is changed from the value Vw1 into a lower value (zero in the figure).

In the case of erasing address format, the wall voltage Vw between main electrodes is set to a value Vw2 within a lighting range in which the sustaining discharge can be generated as a preprocess of the addressing process. In the addressing process, a strong addressing discharge is generated for the non-selected cell, and the wall voltage Vw is changed from the value Vw2 into a value in the non-lighting range (zero in the figure). In the selected cell, a weak addressing discharge is generated for the priming. In this case, the wall voltage Vw is changed from the value Vw2 into a value Vw2' in the lighting-range.

According to a second aspect of the present invention there is provided a gas discharge panel, having scanning electrodes, corresponding respectively to rows of the panel, and data electrodes, corresponding respectively to columns of the panel, and also having cells arranged respectively at intersections of the scanning electrodes and the data electrodes so as to form a matrix, and also having drive circuitry operable, in an addressing period, to cause each of the cells to be set selectively either into a to-be-lit state or into a not-to-be-lit state, such state setting being performed by selecting rows one after another in a predetermined scanning sequence using the scanning electrodes corresponding respectively to the rows and, for each such selected row, driving the data electrodes in accordance with state setting data corresponding to the row concerned, said drive circuitry being further operable, in a sustain period, to cause respective display operations to be performed simultaneously in all cells that have been set into said to-be-lit state; characterised in that the drive circuitry is operable, in said addressing period, to generate discharges in all cells of each selected row, irrespective of whether the cells are being set into the to-be-lit state or the not-to-be-lit state; and the drive circuitry is further operable to set an intensity of the discharge in each said cell of a selected row in said addressing period in accordance with the state setting data corresponding to the row concerned such that the intensities of the discharges in cells of the selected row that are being set into one of the two states are stronger than the intensities of the discharges in cells of the selected row that are being set into the other of the two states.

### BRIEF DESCRIPTION OF THE DRAWINGS

Figs. 1A and 1B show variations of the wall voltage in the addressing of the AC type plasma display panel to which the present invention is applied.
Fig. 2 is a schematic drawing of a plasma display device in accordance with the present invention.
Fig. 3 is a perspective view showing the inner structure of the plasma display panel.
Fig. 4 is a diagram showing a structure of the field.
Fig. 5 shows voltage waveforms in a first example of the drive sequence.
Fig. 6 shows voltage waveforms in a second example of the drive sequence.
Fig. 7 shows voltage waveforms in a third example of the drive sequence.
Fig. 8 shows voltage waveforms in a fourth example of the drive sequence.
Fig. 9 is a schematic diagram of the main electrode arrangement in accordance with a second embodiment.
Fig. 10 shows voltage waveforms in a fifth example of the drive sequence.
Fig. 11 shows voltage waveforms in a sixth example of the drive sequence.
Fig. 12 shows voltage waveforms of the addressing preparation period.

### DESCRIPTION OF THE PREFERRED EMBODIMENTS

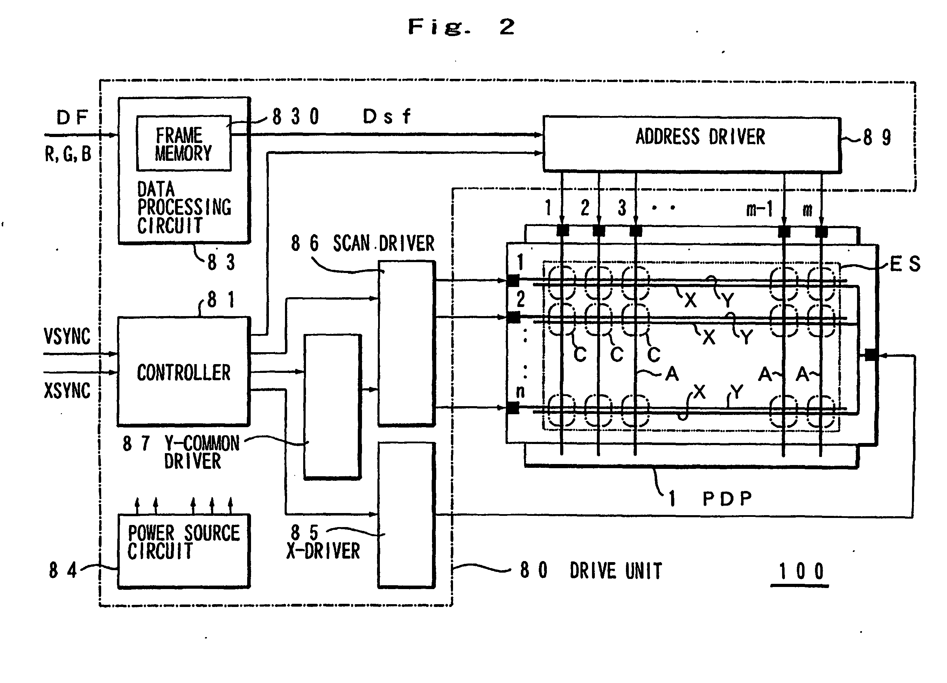

Fig. 2 is a schematic drawing of a plasma display device 100 in accordance with the present invention.

The plasma display device 100 includes an AC type plasma display panel 1 that is of a thin-type and matrix-type color display device and a driving unit 80 for selectively lighting a plurality of cells C that make up a screen ES having m columns and n rows. The plasma display device 100 is used for a wall-hung television set or a monitor of a computer set.

The plasma display panel 1 has main electrodes X, Y that makes up electrodes pairs and are arranged in parallel for generating sustaining discharge (or also called display discharge). The main electrodes X, Y and address electrodes A cross each other in each cell C so as to form the three-electrode plane discharge structure. The main electrodes X, Y extend in the row direction (the horizontal direction) of the screen ES, and the main electrode Y is used for a scanning electrode that selects cells C row by row in addressing. The address electrodes A extend in the column direction (the vertical direction), and are used for a data electrode that select cells C row by row. The area where the group of the main electrodes and the group of the address electrodes in the substrates surface becomes the display area (i.e., the screen ES).

The driving unit 80 includes a controller 81, a data processing circuit 83, a power source circuit 84, an X-driver 85, a scan driver 86, a Y-common driver 87, and an address driver 89. The driving unit 80 is disposed at the rear side of the plasma display panel 1. Each driver and the electrodes of the plasma display panel 1 are connected electrically by a flexible cable (not shown). The driving unit 80 is provided with field data DF indicating intensity levels (gradation level) of colors R, G and B of each pixel from an external equipment such as a TV tuner or a computer, as well as various synchronizing signals.

The field data DF are temporarily stored in a frame memory 830 in the data processing circuit 83, and then are converted into subfield data Dsf. The subfield data Dsf are stored in the frame memory 830 and transferred to the address driver 89 at proper time. The value of each bit of the subfield data Dsf is information indicating whether the cell is required to be lightened or not in the subfield for realizing the gradation mentioned below. More specifically, it is information indicating whether the addressing discharge is strong or weak.

The X-driver 85 applies the driving voltage to all of the main electrodes X simultaneously. The electric commonality of the main electrodes X can be realized not only by the illustrated linkage on the panel in Fig. 2 but by wiring inside the X-driver 85 or by wiring of the connection cable. The scan driver 86 applies the driving voltage to the main electrode Y of the selected row in addressing. The Y-common driver 87 applies the driving voltage to all of the main electrodes Y simultaneously in sustaining. In addition, the address driver 89 applies the driving voltage to the total m of address electrodes A in accordance with the subfield data Dsf for generating the first or second intensity of addressing discharge. These drivers are supplied with a predetermined electric power by the power source circuit 84 via wiring conductors (not shown).

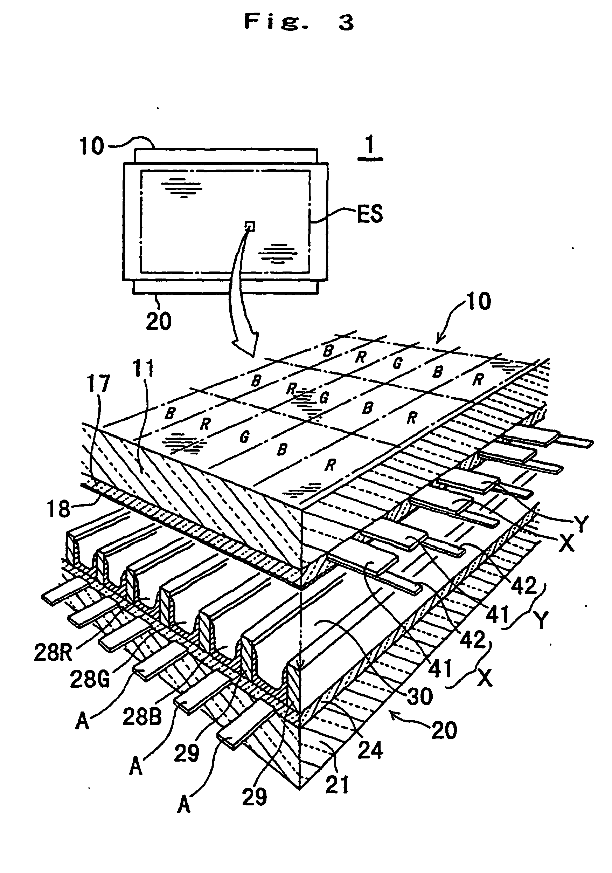

Fig. 3 is a perspective view showing the inner structure of the plasma display panel 1.

In the plasma display panel 1, a pair of main electrodes X, Y is arranged for each row on the inner side of a glass substrate 11 that is a base material of the front side substrate structure. The row is an array of cells in the horizontal direction in the screen. Each of the main electrodes X, Y includes a transparent conductive film 41 and a metal film (a bus conductor) 42, and is coated with a dielectric layer 17 that is made of low melting point glass and has thickness of approximately 30 microns. The surface of the dielectric layer 17 is provided with a protection film 18 made of magnesia (Mg0) having thickness of approximately several thousands angstroms. The address electrodes A are arranged on the inner surface of a glass substrate 21 that is a base material of the rear side substrate structure, and is coated with a dielectric layer 24 having thickness of approximately 10 microns. A diaphragm 29 having linear band shape of 150 micron height is disposed between the address electrodes A on the dielectric layer 24. Discharge spaces 30 are defined by these diaphragms 29 in the row direction for each subpixel (small lighting area), and the gap size of the discharge spaces 30 is defined. Three fluorescent layers 28R, 28G, 28B for red, green and blue colors are disposed so as to cover the inner wall of the rear side including the upper portion of the address electrode A and the side wall of the diaphragm 29. The discharge space 30 is filled with a discharge gas containing neon as the main ingredient and xenon. The fluorescent layers 28R, 28G, 28B are locally pumped to emit light by ultraviolet light emitted by the xenon gas on discharge. A pixel includes three subpixels aligned in the row direction. A structure in each subpixel is the cell (display element) C. Since the arrangement pattern of the diaphragm 29 is a stripe pattern, each part of the discharge space 30 corresponding to each column is continuous in the column direction over all rows.

A method for driving the plasma display panel 1 in the plasma display device 100 will be explained as follows. First, reproduction of the gradation will be explained generally, and then driving sequence that is unique to the present invention will be explained in detail.

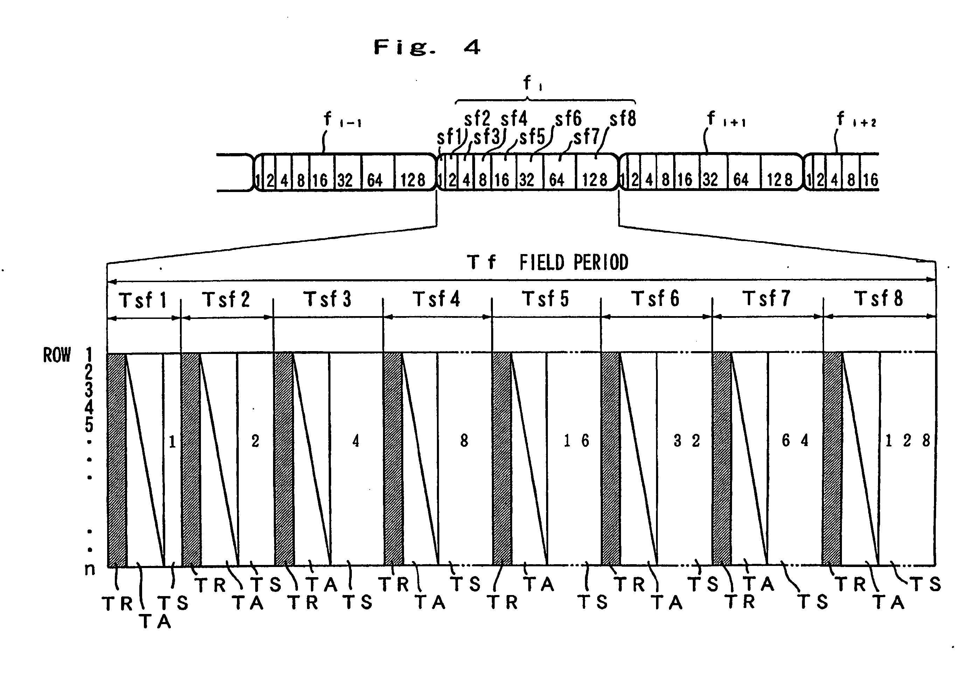

Fig. 4 shows a structure of the field.

The gradation is reproduced by controlling lighting with binary data in displaying a television image. Therefore, each field f of the sequential input image is divided into, for example, eight subframes sf1, sf2, sf3, sf4, sf5, sf6, sf7 and sf8 (the numerical subscripts represent display order). In other words, each field f that makes up the frame is replaced with eight subframes sfl-sf8. Each frame is divided into eight when reproducing a non-interlace image such as an output of a computer. Weights are assigned so that the relative ratio of the intensity in these subfields sfl-sf8 becomes approximately 1:2:4:8:16:32:64:128 for setting the number of sustaining discharge. Since 256 steps of intensity can be set by combination of light/non-light of each subfield for each color, R, G, B, the number of color that can be displayed becomes 256³. It is not necessary to display subfields sf1-sf8 in the order of the weight of intensity. For example, optimizing can be performed in such a way that the subfield sf8 having a large weight is disposed at the middle of the field period Tf.

The subfield period Tsfⱼ that is assigned to each subfield sfⱼ (j = 1-8) includes a preparation period TR for adjusting charge by the ramp voltage, an address period TA for forming a charge distribution corresponding to a display contents and a sustain period TS for sustaining the lightened state so as to ensure the intensity corresponding to the gradation level. In each subfield period Tsfⱼ, lengths of the preparation period TR and the address period TA are constant regardless of the weight of the intensity, while the larger the weight of the intensity, the longer the length of the sustain period TS becomes. Namely, the eight subfield periods Tsfⱼ corresponding to one field f are different from each other.

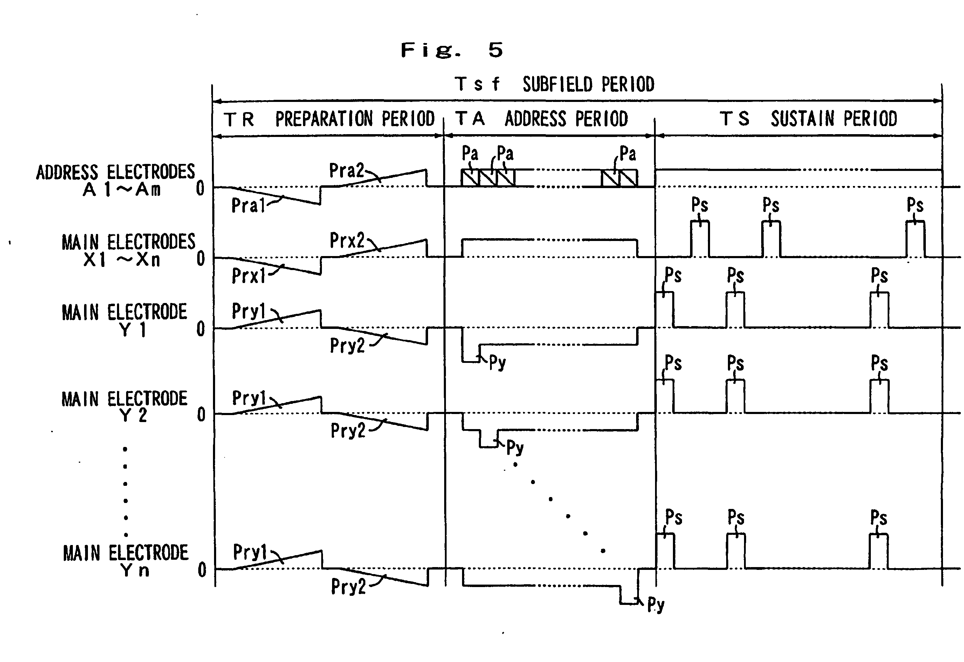

Fig. 5 is a diagram of voltage waveforms showing a first example of the drive sequence. In this figure, main electrodes X, Y are denoted with a suffix (1, 2, ···n) representing the arrangement order of the corresponding row, and the address electrodes A are denoted with a suffix (1-m) representing the arrangement order of the corresponding column. Other figures explained below will be in the same way.

The drive sequence that is repeated in every subfield is generally explained as follows.

In the preparation period TR, all of address electrodes A1-Am are supplied with the pulse Pra1 and the opposite polarity pulse Pra2 in sequence, all of the main electrodes X1-Xn are supplied with the pulse Prx1 and the opposite polarity pulse Prx2 in sequence, and all of the main electrodes Y1-Yn are supplied with the pulse Pry1 and the opposite polarity pulse Pry2 in sequence. The pulse application means to bias the electrode temporarily to a different potential from the reference potential (e.g., the grand level). In this example, pulses Pra1, Pra2, Prx1, Prx2, Pry1 and Pry2 are ramp voltage pulses having a rate of change that generates minute discharge. The pulses Pra1, Prx1 have the negative polarity, while the pulse Pry1 has the positive polarity. Application of the pulses Pra2, Prx2 and Pry2 having ramp waveforms enable the wall voltage to be adjusted into the value corresponding to the subtract of the discharge starting voltage and the pulse amplitude. The pulses Pra1, Prx1 and Pry1 are applied so that the " former lightened cell" that was lightened in the former subfield and the "former non-lightened cell" that was not lightened in the former subfield generate appropriate wall voltage.

In the address period TA, the scanning pulse Py is applied to the main electrodes Y1-Yn in the arrangement order. At the same time with this row selection, an address pulse Pa having the polarity opposite to the scanning pulse Py and the peak value corresponding to the subfield data Dsf of the selected row is applied to the address electrodes A1-Am. Namely, strong discharge is generated in the selected cell, while weak discharge is generated in the non-selected cell. When the scanning pulse Py and the address pulse Pa are applied, discharge occurs between the address electrode A and the main electrode Y, which becomes a trigger for generating discharge between the main electrodes X and Y. These sequential discharges, i.e., the addressing discharge, are related to a discharge starting voltage Vf_{AY} between the address electrode A and main electrode Y (hereinafter, referred to as an electrode gap AY) and a discharge starting voltage Vf_{XY} between the main electrodes X, Y (hereinafter, referred to as an electrode gap XY). Therefore, in the above-mentioned preparation period TR, adjustment of the wall voltage is performed for both the electrode gap XY and the electrode gap AY. The wall voltage between the electrode gaps AY may be a value such that the discharge cannot occur before applying the scanning pulse Py to the main electrode Y.

In the sustain period TS, a sustain pulse Ps having a predetermined polarity (plus polarity in the illustrated example) is applied to all of the main electrodes Y1-Yn at first. Then, the sustain pulse Ps is applied to the main electrodes X1-Xn and the main electrodes Y1-Yn alternately. In this example, the final sustain pulse Ps is applied to the main electrodes X1-Xn. When the sustain pulse Ps is applied, a surface discharge will occur in the cell that is lighted this time and has remaining wall charge in the address period TA. Every time when the surface discharge occurs, the polarity of the wall voltage between electrodes changes. All of the address electrodes A1-Am are biased to the same polarity as the sustain pulse Ps in order to prevent unnecessary discharge in the sustain period TS.

The wall voltage of the electrode gap XY at the end of the preparation period TR is represented by Vw1 (X side is positive), while the minimum value of the wall voltage of the electrode gap XY when the cell is lighted in the sustain period TS is represented by V_{TH} (absolute value without polarity). In the plasma display panel 1, the main electrodes X, Y are arranged symmetrically with respect to the surface discharge gap. Therefore, the threshold levels Vth1, Vth2 shown in Figs. 1A and 1B have relationship such that Vth1 = V_{TH} and Vth2 = -V_{TH}. Concerning the selected cell, the strong addressing discharge makes the wall voltage of the electrode gap XY change from Vw1 to -V_{TH} or below. Concerning the non-selected cell, a weak addressing discharge makes the wall voltage of the electrode gap XY change to a value higher than -V_{TH} and lower than V_{TH} (preferably zero or a value nearly equal to zero).

In order to control the addressing discharge, wall voltage is preferably adjusted in the preparation process as explained in Japanese Patent Application No. 10-157107. Usage of the ramp wave in the preparation process makes the adjustment of the wall voltage easy. When plural minute discharges occur continuously or continuous discharges occur by applying the ramp wave voltage, the sum of the applied voltage and the wall voltage during discharge is maintained at the value almost equal to the discharge starting voltage. Therefore, a difference between the discharge starting voltage and the peak voltage (pulse amplitude) of the ramp wave becomes the wall voltage after the ramp wave is applied. Compared with a rectangular wave, the ramp wave has less quantity of light emission. It is also advantageous in reducing the background intensity.

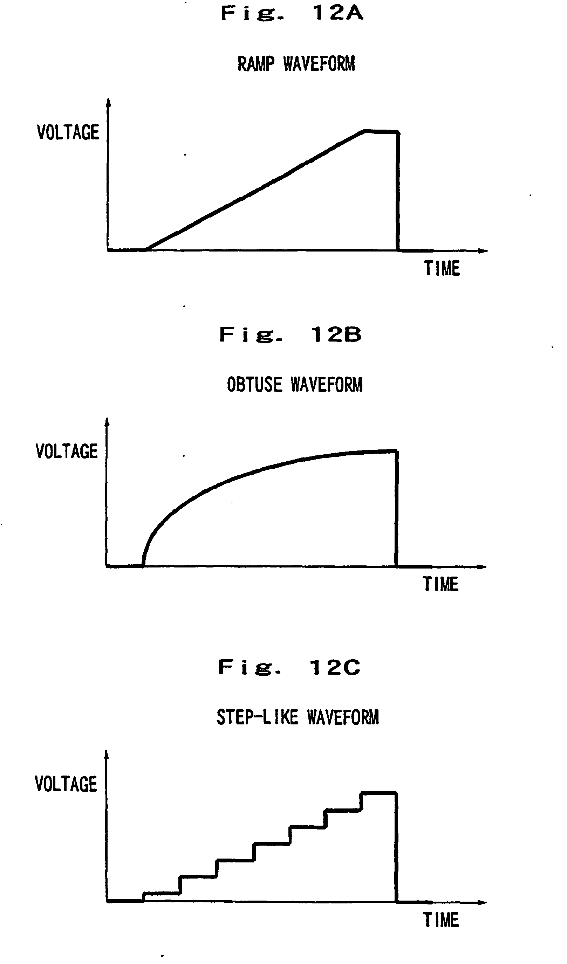

The voltage waveform used for the preparation process is not limited to a ramp wave. Only the requirement is that the voltage between the electrodes increases simply from the first set value to the second set value, while plural minute discharges can occur continuously or continuous discharges can occur. For example, the ramp waveform can be replaced with an obtuse waveform or a step-like waveform shown in Fig. 12. Alternatively, the voltage waveform may be a combination of plural waveforms selected from the ramp waveform, the obtuse waveform and the step-like waveform.

An example of the applied voltages is explained as follows. The discharge starting voltage of the electrode gap XY is 220 volts, the discharge starting voltage of the electrode gap AY is 170 volts. Hereinafter, concerning the polarity of the applied voltage and the wall voltage, the X side is regarded as positive in the electrode gap XY, while the A side is regarded as positive in the electrode gap AY.

In the preparation period TR, the widths of the pulses Pra1, Prx1 and Pry1 is 70µs, the rate of potential change of the electrode gap XY is -4.2V/µs and the final voltage thereof is -300V, the rate of voltage change of the electrode gap AY is -2.8V/µs and the final voltage thereof is -200V. The wall voltage at the end of the pulse application is 80V for the electrode gap XY and 30V for the electrode gap AY. The widths of the pulses Pra2, Prx2 and Pry2 are 25µs, the rate of potential change of the electrode gap XY is 6.8V/µs and the final voltage is 170V.

The rate of potential change of the electrode gap AY is 6.8V/µs and the final voltage is 170V. The wall voltage at the end of the pulse application is 50V for the electrode gap XY and 0V for the electrode gap AY.

In the address period TA, the address electrode potential of the strong addressing discharge is 80V, the address electrode potential of the weak addressing discharge is 0V, and the potential of the main electrode X is 80V. The potential of the main electrode Y when the scanning pulse is applied is -140V, while the potential of the main electrode Y when the scanning pulse is not applied is 0V. The wall voltage of the electrode gap XY at the end of the strong addressing discharge is -120V, while the wall voltage of the electrode gap XY at the end of the weak addressing discharge is 0V.

In the sustain period TS, the amplitude of the sustain pulse Ps is 170V, and the address electrode potential is 85V. In this case, the minimum value of the wall voltage for generating the sustaining discharge is 70V.

In the conventional technique, addressing of a row needs 3µs. However, in this example, since the addressing discharge in the upstream side of row selection contributes to the priming in the downstream, the address pulse Pa having the pulse width of 1µs enables stable addressing.

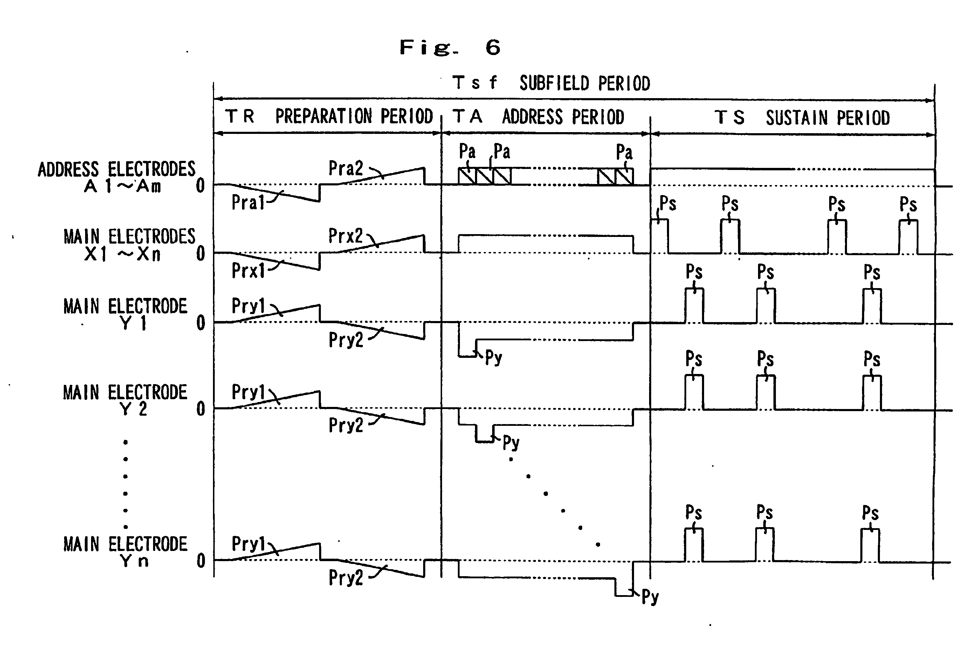

Fig. 6 is a diagram of the voltage waveform showing a second example of the drive sequence. This example is an erasing address format, in which the strong discharge occurs in the non-selected cell.

In the preparation period TR, the pulse having the ramp waveform is applied in the same way as the example shown in Fig. 5, so that the wall voltage of the electrode gap XY is controlled to the target value of the preparation process.

In the address period TA, a weak addressing discharge is generated in the selected cell when applying the scanning pulse. The intensity of discharge is set to the value such that the wall voltage of the electrode gap XY after addressing discharge remains within the lighting range. In the non-selected cell, a strong addressing discharge is generated when applying the scanning pulse, so that the wall voltage of the electrode gap XY is changed to a value within the non-lighting range. The intensity of the discharge when applying the scanning pulse is controlled by the potential of the address electrode in the same way as the example shown in Fig. 5.

The wall voltage of the electrode gap XY at the end of the preparation period is set to Vw2 (X side is positive), and the minimum value of the wall voltage of the electrode gap XY for the cell to be lightened in the sustain period TS is set to V_{TH} (absolute value). For the selected cell, the wall voltage of the electrode gap XY is changed by the weak addressing discharge in the range from Vw2 to Vth or more. For the non-selected cell, the wall voltage of the electrode gap XY is changed by the strong addressing discharge to a value higher than -V_{TH} and lower than V_{TH} (preferably zero or a value nearly equal to zero).

An example of the applied voltages is explained as follows. The discharge starting voltage of the electrode gap XY is 220 volts, the discharge starting voltage of the electrode gap AY is 170 volts. Hereinafter, concerning the polarity of the applied voltage and the wall voltage, the X side is regarded as positive in the electrode gap XY, while the A side is regarded as positive in the electrode gap AY.

In the preparation period TR, the widths of the pulses Pral, Prxl and Pryl are 70µs, the rate of potential change of the electrode gap XY is -6.0V/µs and the final voltage thereof is -420V, the ratio of voltage change of the electrode gap AY is -3.6V/µs and the final voltage thereof is -250V. The wall voltage at the end of the pulse application is 170V for the electrode gap XY and 80V for the electrode gap AY. The widths of the pulses Pra2, Prx2 and Pry2 are 25µs, the rate of potential change of the electrode gap XY is 2.0V/µs and the final voltage is 50V. The rate of potential change of the electrode gap AY is 5.2V/µs and the final voltage is 130V. The wall voltage at the end of the preparation period is 170V for the electrode gap XY and 40V for the electrode gap AY.

In the address period TA, the address electrode potential of the strong addressing discharge is 40V, the address electrode potential of the weak addressing discharge is 0V, and the potential of the main electrode X is 0V. The potential of the main electrode Y when the scanning pulse is applied is -100V, while the potential of the main electrode Y when the scanning pulse is not applied is 0V. The wall voltage of the electrode gap XY at the end of the weak addressing discharge is 120V, while the wall voltage of the electrode gap XY at the end of the strong addressing discharge is 0V.

In the sustain period TS, the amplitude of the sustain pulse Ps is 170V, and the address electrode potential is 85V. In this case, the minimum value of the wall voltage for generating the sustaining discharge is 70V.

In this example too, since the addressing discharge at the upstream side of the row selection contributes to the priming in the downstream, the address pulse Pa having the pulse width of 1µs enables stable addressing.

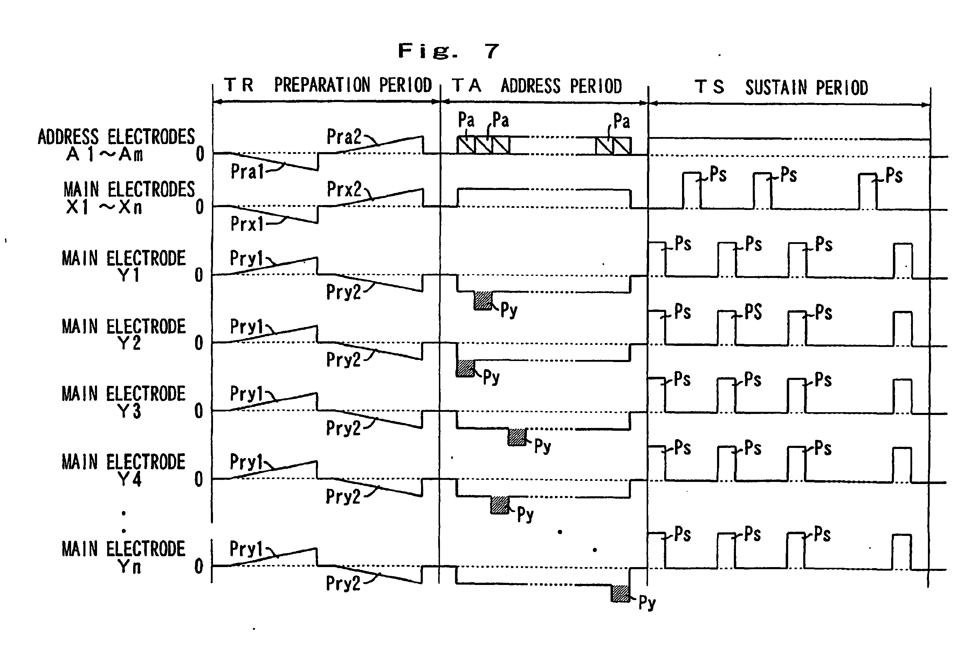

Fig. 7 is a diagram of the voltage waveform showing a third example of the drive sequence.

In the addressing, the row selection is not required to perform in the arrangement order. Namely, it is only required that the space charge supplied by the addressing discharge in a certain row is within a distance range that can contribute to the priming effect for the later addressing discharge. In Fig. 7, even rows and odd rows are selected alternately, and the each group of even or odd rows is scanned by the arrangement order from the upper to the lower. When switching from the odd row to the even row, the row selection is performed by skipping two rows. Sufficient priming effect was obtained by the row selection with skipping two rows in the 25 inches and SXGA screen.

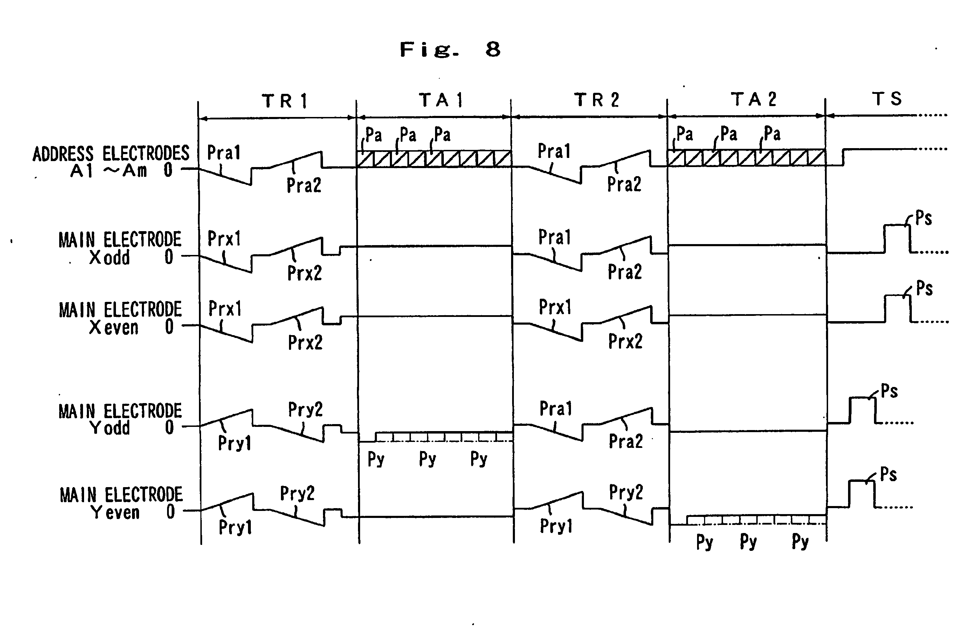

Fig. 8 is a diagram of the voltage waveform showing a fourth example of the drive sequence.

The rows constituting the screen are divided into the group of odd rows and the group of even rows. The preparation periods TR1, TR2 and the address periods TA1, TA2 are assigned to each group. The sustain period TS is common to both groups.

Dividing the address process into two, the potential of the main electrode X of the selected row can be different from the potential of the main electrode X of the non-selected row that is adjacent to the selected row, so that the propagation of the space charge generated by the addressing discharge along the row direction is controlled.

The second preparation period TR2 is provided for the following purposes. One purpose is to readjust the potential of the even rows since the state of the wall charge of the even rows is disturbed a little by the addressing discharge of the odd rows (the first address process). Another purpose is to supply the priming particle to the addressing discharge of the head of the even row (the second address process).

In the preparation period TR2, only the charges of the even rows are controlled without disturbing the state of the wall charge of the odd rows. For this reason, the pulse applied to the even rows in the preparation period TR2 is the same as the first preparation period TR1, while the pulse applied to the main electrodes X, Y of the odd rows in the preparation period TR2 is the same as the pulses Pral and Pra2 applied to the address electrodes A1-Am. Thus, the applied voltage of the electrode gap AY and the electrode gap XY within the cell of the odd rows in the preparation period TR2 becomes zero, so that the state of the wall charge cannot be disturbed.

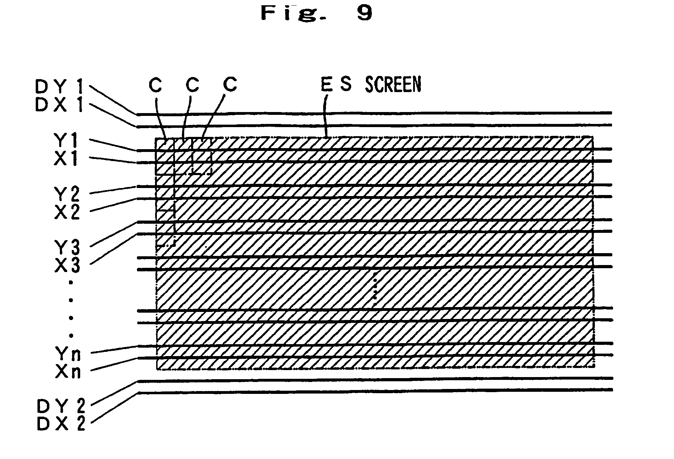

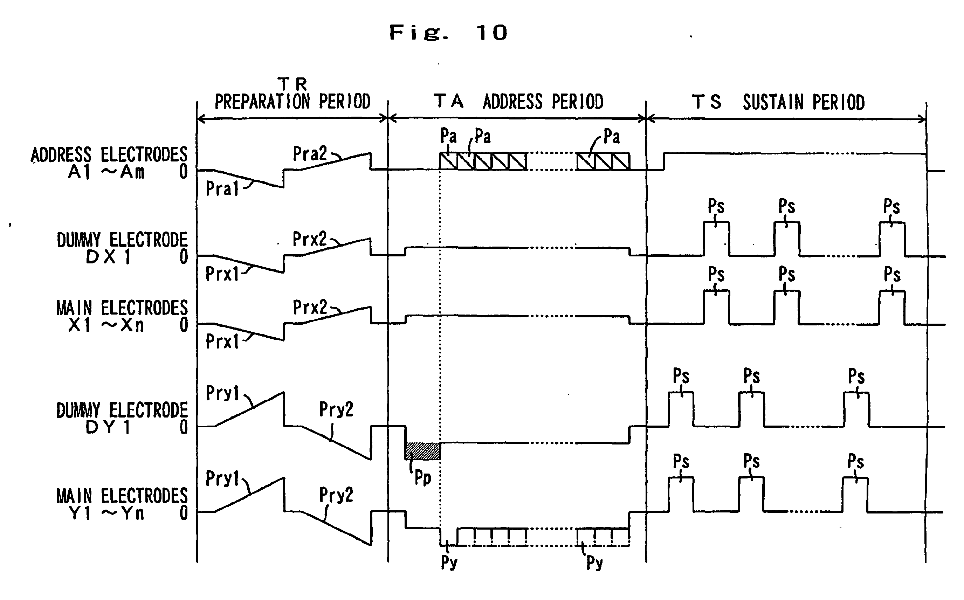

Fig. 9 is a schematic drawing of the main electrode arrangement of a second embodiment. Fig. 10 shows voltage waveforms of a fifth example of the drive sequence.

In the above-mentioned first to fourth examples, supply of the priming particle to the first addressing discharge in the subfield is performed by the discharge in the preparation process. In order to ensure the supply of the priming particle, it is more effective to generate the priming discharge after the preparation process and before starting the addressing. For example, the outside of the screen ES in the row direction is provided with an auxiliary main electrode (an electrode for priming) that is similar to the main electrodes X, Y so as to generate priming discharge by the auxiliary main electrode. In the example shown in Fig. 9, the auxiliary main electrodes DY1, DX1 are disposed at the outside of the main electrodes Y1, X1 of the first row, and the auxiliary main electrodes DY2, DX2 are disposed at the outside of the main electrodes Yn, Xn of the final row. As shown in Fig. 10, the pulse Pp is applied to the auxiliary main electrode DY1 so as to generate the priming, then the scanning is started from the main electrode Y1 that is closest to the auxiliary main electrode DY1 in the screen. Though the peak value of the pulse Pp is the same as the scanning pulse Py, the pulse width is set longer than the scanning pulse P so as to increase the discharge probability. The arrangement of the pair of auxiliary main electrodes makes the pairs of main electrodes at the first and final rows adjacent to the main electrodes at both sides in the same way as the other pair of main electrodes. Therefore, the discharge condition is uniformed and the display quality is increased.

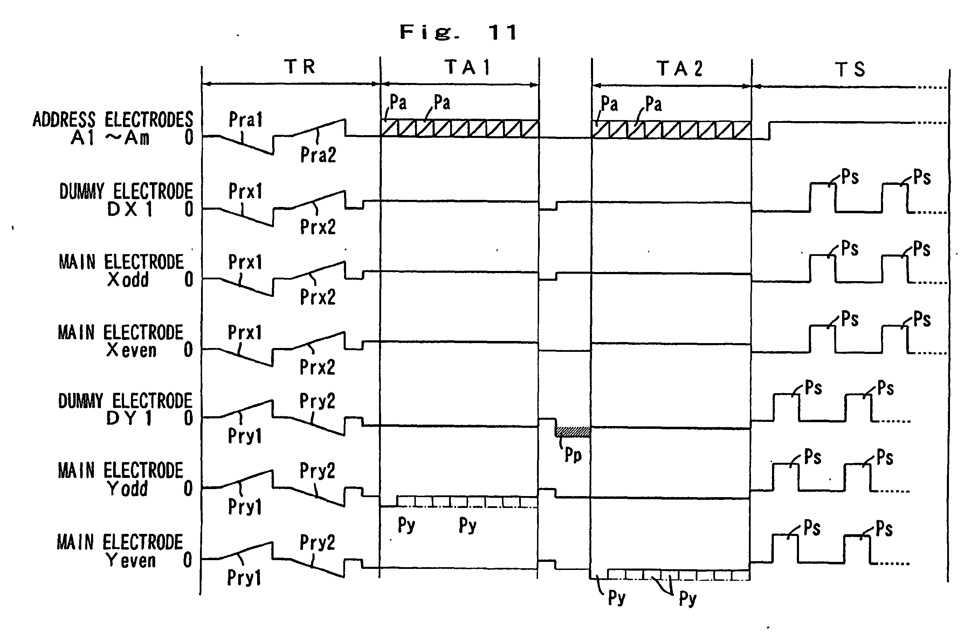

Fig. 11 is a diagram of the voltage waveform showing a sixth example of the drive sequence.

In the above-mentioned fourth example, the second preparation period TR2 is provided. However, the second preparation period TR2 can be eliminated when the disturbance of the charge state of the even rows by the address process of the odd rows is sufficiently small. It is preferable that in order to supply the priming particle to the first addressing discharge of the latter half of the address process, the pair of auxiliary main electrodes may be used so as to generate the priming discharge before the latter half of the address process. The priming discharge can be generated just before the address process of the odd row.

When the addressing is performed independently for the odd rows and for even rows as explained in the fourth and sixth examples, the main electrodes X of the odd rows can be common and controlled by the first driver, while the main electrodes X of the even rows can be common and controlled by the second driver.

In the above-mentioned embodiments, the target to be driven is the plasma display panel 1 having structure in which the main electrodes X, Y and the address electrode A are covered with the dielectric material. However, the present invention can be also applied to the structure in which either electrode making up a pair is covered with the dielectric material. For example, even in the structure that has no dielectric material for covering the address electrode A, or the structure in which one of the main electrodes X, Y is exposed to the discharge space 30, the sufficient wall voltage can be generated in the electrode gaps XY, AY. The polarity, the value, the application time and the rate of rising change of the applied voltage are not limited to the examples. The the present invention can be applied not only to display devices including the plasma display panel, PALC, but also to gas-discharge devices having other structure without utilizing the memory function by the wall charge. The gas-discharge is not necessarily required to be for display.

## Claims

1. A method of driving a gas discharge panel, the panel having scanning electrodes (Y1∼Yn), corresponding respectively to rows of the panel, and data electrodes (A1∼Am), corresponding respectively to columns of the panel, and also having cells arranged respectively at intersections of the scanning electrodes and the data electrodes so as to form a matrix, and a driving period (Tsf) of the panel including an addressing period (TA), in which each of the cells is set selectively either into a to-be-lit state or into a not-to-be-lit state, such state setting being performed by selecting rows one after another in a predetermined scanning sequence using the scanning electrodes corresponding respectively to the rows and, for each such selected row, driving the data electrodes in accordance with state setting data (Dsf) corresponding to the row concerned, said driving period also including a sustain period (TS) in which respective sustain discharges are generated simultaneously only in the cells that have been set into said to-be-lit state;
**characterised in that**:
in said addressing period, discharges are generated in all cells of each selected row, including both of the cells that are being set into the to-be-lit state and the not-to-be-lit state; and
an intensity of the discharge in each said cell of a selected row in said addressing period is set in accordance with the state setting data corresponding to the row concerned such that the intensities of the discharges in cells of the selected row that are being set into one of the two states are stronger than the intensities of the discharges in cells of the selected row that are being set into the other of the two states.

2. A method as claimed in claim 1, wherein:
the scanning electrodes (Y) and/or the data electrodes (A) are covered with a dielectric layer (17, 24) so that a wall voltage can be generated at an electrode gap (AY, XY) in each cell;
a discharge space is continuous over an entire length of each column of the panel; and
the state setting data corresponding to each selected row is binary data;
the method comprising the steps of:
in said addressing period, controlling the wall voltages (Vw) of all cells of each said selected row in accordance with said state setting data by generating discharges having first intensities in cells of the selected row that are being set into one of the two states and by generating discharges having second intensities, different from the first intensities, in cells of the selected row that are being set into the other of the two states, in accordance with the state setting data corresponding to the cells of the selected row; and
in said sustain period, applying an alternating voltage (Ps) to all cells, repeatedly.

3. The method according to claim 2, further comprising the steps of:
applying at least one preparation pulse (Pra1, Prx1, Pry1, Pra2, Prx2, Pry2) to all cells of the selected row before the addressing period so as to perform addressing preparation for setting the wall voltage (Vw) of each cell to a predetermined level (Vw1); and
generating discharges having said first intensities in the cells to be set into said to-be-lit state in the addressing period so as to make the level of the wall voltage set in each of those cells in the addressing preparation increase to a sufficient level (Vw<Vth2) to regenerate discharge in the sustain period following said addressing period, and generating discharges having said second intensities in the cells to be set into said not-to-be-lit state in the addressing period so as to make the level of the wall voltage set in each of those cells in the addressing preparation decrease to a level (Vth2<Vw<Vthl) such that discharge cannot restart in said following sustain period.

4. The method according to claim 2, further comprising the steps of:
applying at least one preparation pulse (Pra1, Prx1, Pry1, Pra2, Prx2, Pry2) to all cells of the selected row before the addressing period so as to perform addressing preparation for setting the wall voltage (Vw) of each cell to a predetermined level (Vw2); and
generating discharges having said first intensities in the cells to be set into said to-be-lit state in the addressing period so as to make the level of the wall voltage set in each of those cells in the addressing preparation maintain a sufficient level (Vw>Vth1) to regenerate discharge in the sustain period following said addressing period, and generating discharges having said second intensities in the cells to be set into said not-to-be-lit state in the addressing period so as to make the level of the wall voltage set in each of those cells in the addressing preparation decrease to a level (Vth2<Vw<Vthl) such that discharge cannot restart in the following sustain period.

5. The method according to any one of claims 2 to 4, wherein in the addressing period respective potentials of the scanning electrodes (Y1∼Yn) are controlled independently of one another to perform selection of rows, and the data electrodes (A1∼Am) are biased selectively to a first potential (Pa) or a second potential (0) in accordance with said state setting data corresponding to each selected row in synchronism with the selection of rows.

6. A method according to any one of claims 2 to 5, wherein such first discharges or such second discharges are generated simultaneously in all cells of one selected row in the addressing period.

7. The method according to any one of claims 2 to 6, wherein the predetermined scanning sequence is such that the discharges in the cells of a given row in the sequence become effective as priming discharges in at least the next two rows in the sequence after the given row.

8. The method according to any one of claims 2 to 7, wherein:
the rows of the panel are sub-divided into a group of odd rows and a group of even rows;
the group of odd rows is addressed in a first such addressing period (TA1) and the group of even rows is addressed in a second such addressing period (TA2) different from said first addressing period; and
a voltage (Pra1, Prx1, Pry1, Pra2, Prx2, Pry2) is applied to all cells of the group of even rows between the first and second addressing periods so as to generate priming discharges.

9. The method according to any one of claims 2 to 7, wherein the panel also has a singular or plural pairs of auxiliary electrodes (DX1, DY1, DX2, DY2), similar to the scanning electrodes, arranged at the outside of the panel in the column direction, and the method further comprises:
applying a voltage (Pp) to one auxiliary electrode of one pair among said singular or plural pairs of auxiliary electrodes (DX1, DY1, DX2, DY2) in the addressing period (Ta) for generating priming discharges before a first row (Y1) is selected in said scanning sequence, said one pair closest to said first row.

10. The method according to any one of claims 2 to 7, wherein:
the panel also has a singular or plural pairs of auxiliary electrodes (DX1, DY1, DX2, DY2), similar to the scanning electrodes, arranged at the outside of the panel in the column direction;
the rows of the panel are sub-divided into a group of odd rows and a group of even rows;
the group of odd rows is addressed in a first such addressing period (TA1) and the group of even rows is addressed in a second such addressing period (TA2) different from said first addressing period; and
between said first and second addressing periods, a voltage (Pp) is applied to one auxiliary electrode of one pair among said singular or plural pairs of auxiliary electrodes (DX1, DY1, DX2, DY2), said one pair closest to a row that is selected first in the group of even rows, during the course of said scanning sequence, so as to generate priming discharges.

11. The method according to claim 3 or 4, wherein said addressing preparation comprises applying a voltage to an electrode gap in each said cell, the applied voltage increasing monotonically from a first predetermined value to a second predetermined value, so as to adjust the wall voltage of the electrode gap concerned by generating plural discharges or a continuous discharge in the rising period of the voltage.

12. A gas discharge panel, having scanning electrodes (Y1∼Yn), corresponding respectively to rows of the panel, and data electrodes (A1∼Am), corresponding respectively to columns of the panel, and also having cells arranged respectively at intersections of the scanning electrodes and the data electrodes so as to form a matrix, and also having drive circuitry (80) operable, in an addressing period (TA), to cause each of the cells to be set selectively either into a to-be-lit state or into a not-to-be-lit state, such state setting being performed by selecting rows one after another in a predetermined scanning sequence using the scanning electrodes corresponding respectively to the rows and, for each such selected row, by driving the data electrodes in accordance with state setting data (Dsf) corresponding to the row concerned, said drive circuitry being further operable, in a sustain period (TS), to cause respective sustain discharges to be generated simultaneously only in the cells that have been set into said to-be-lit state;
**characterised in that**:
the drive circuitry is operable, in said addressing period, to generate discharges in all cells of each selected row, including both of the cells that are being set into the to-be-lit state and the not-to-be-lit state; and
the drive circuitry is further operable to set an intensity of the discharge in each said cell of a selected row in said addressing period in accordance with the state setting data corresponding to the row concerned such that the intensities of the discharges in cells of the selected row that are being set into one of the two states are stronger than the intensities of the discharges in cells of the selected row that are being set into the other of the two states.

## Patentansprüche

1. Verfahren zum Ansteuern eines Gasentladungspanels, das jeweils seinen Zeilen entsprechende Abtastelektroden (Y1-Yn) und jeweils seinen Spalten entsprechende Datenelektroden (A1-Am) sowie Zellen aufweist, die unter Bildung einer Matrix jeweils an Kreuzungen der Abtastelektroden und der Datenelektroden angeordnet sind, wobei die Ansteuerzeitspanne (Tsf) des Panels eine Adressierungszeitspanne (TA) enthält, in der die Zellen jeweils wahlweise entweder in einen zum Leuchten zu bringenden Zustand oder einen nicht zum Leuchten zu bringenden Zustand gesetzt werden, wobei das Setzen des Zustands durch Wählen von Zeilen einer nach der anderen in einer vorbestimmten Abtastabfolge unter Verwendung der jeweils den Zeilen entsprechenden Abtastelektroden und für jede solche gewählte Zeile durch Ansteuern der Datenelektroden entsprechend der betreffenden Zeile entsprechenden Zustandssetzdaten (Dsf) durchgeführt wird, und wobei die Ansteuerzeitspanne außerdem eine Haltezeitspanne (TS) enthält, in der lediglich in den Zellen, die in den zum Leuchten zu bringenden Zustand gesetzt wurden, gleichzeitig entsprechende Halteentladungen erzeugt werden,
**dadurch gekennzeichnet, dass**
in der Adressierungszeitspanne in allen Zellen der jeweils gewählten Zeile, einschließlich den in den zum Leuchten zu bringenden Zustand und den in den nicht zum Leuchten zu bringenden Zustand gesetzten Zellen Entladungen erzeugt werden, und
die Intensität der Entladung in jeder Zelle einer gewählten Zeile in der Adressierungszeitspanne entsprechend den der betreffenden Zeile entsprechenden Zustandssetzdaten so gesetzt wird, dass die Intensitäten der Entladungen in Zellen der gewählten Zeile, die in einen der beiden Zustände gesetzt werden, stärker als die Intensitäten der Entladungen in Zellen der gewählten Zeile sind, die in den anderen der beiden Zustände gesetzt werden.

2. Verfahren nach Anspruch 1, wobei
die Abtastelektroden (Y) und/oder die Datenelektroden (A) mit einer dielektrischen Schicht (17, 24) bedeckt sind, so dass an einer Elektrodenlücke (AY, XY) in jeder Zelle eine Wandspannung erzeugt werden kann,
der Entladungsraum über die gesamte Länge einer jeweiligen Spalte des Panels zusammenhängend ist, und
die einer jeweils gewählten Zeile entsprechenden Zustandssetzdaten binäre Daten sind,
wobei das Verfahren folgende Schritte aufweist:
Steuern der Wandspannungen (Vw) aller Zellen der jeweils gewählten Zeile in der Adressierungszeitspanne entsprechend den Zustandssetzdaten, indem entsprechend den den Zellen der gewählten Zeile entsprechenden Zustandssetzdaten in Zellen der gewählten Zeile, die in einen der beiden Zustände gesetzt werden, Entladungen erster Intensitäten und in Zellen der gewählten Zeile, die in den anderen der beiden Zustände gesetzt werden, Entladungen von den ersten Intensitäten verschiedener zweiter Intensitäten erzeugt werden, und
entsprechendes Anliegen einer Wechselspannung (Ps) an alle Zellen in der Haltezeitspanne.

3. Verfahren nach Anspruch 2 mit folgenden weiteren Schritten:
Anlegen mindestens eines Vorbereitungsimpulses (Pra1, Prx1, Pry1, Pra2, Prx2, Pry2) vor der Adressierungszeitspanne an alle Zellen der gewählten Zeile, um eine Adressierungsvorbereitung zum Setzen der Wandspannung (Vw) jeder Zelle auf einen vorbestimmten Pegel (Vw1) auszuführen, und
Erzeugen von Entladungen mit den ersten Intensitäten in den in der Adressierungszeitspanne in den zum Leuchten zu bringenden Zustand zu setzenden Zellen, um den Pegel der in diesen jeweiligen Zellen in der Adressierungsvorbereitung gesetzten Wandspannung auf einen ausreichenden Pegel (Vw<Vth2) ansteigen zu lassen, um in der der Adressierungszeitspanne folgenden Haltezeitspanne eine Entladung zu erneuern, und Erzeugen von Entladungen mit den zweiten Intensitäten in den in der Adressierungszeitspanne in den nicht zum Leuchten zu bringenden Zustand zu setzenden Zellen, um den Pegel der in diesen jeweiligen Zellen in der Adressierungsvorbereitung gesetzten Wandspannung auf einen Pegel (Vth2<Vw<Vth1) abfallen zu lassen, so dass in der folgenden Haltezeitspanne eine Entladung nicht wieder beginnen kann.

4. Verfahren nach Anspruch 2 mit folgenden weiteren Schritten:
Anlegen mindestens eines Vorbereitungsimpulses (Pra1, Prx1, Pry1, Pra2, Prx2, Pry2) vor der Adressierungszeitspanne an alle Zellen der gewählten Zeile, um eine Adressierungsvorbereitung zum Setzen der Wandspannung (Vw) jeder Zelle auf einen vorbestimmten Pegel (Vw2) durchzuführen, und
Erzeugen von Entladungen mit den ersten Intensitäten in den in der Adressierungszeitspanne in den zum Leuchten zu bringenden Zustand zu setzenden Zellen, um den Pegel der in diesen jeweiligen Zellen in der Adressierungsvorbereitung gesetzten Wandspannung auf einem ausreichenden Pegel (Vw>Vth1) halten zu lassen, um in der der Adressierungszeitspanne folgenden Haltezeitspanne eine Entladung zu erneuern, und Erzeugen von Entladungen mit den zweiten Intensitäten in den in der Adressierungszeitspanne in den nicht zum Leuchten zu bringenden Zustand zu setzenden Zellen, um den Pegel der in diesen jeweiligen Zellen in der Adressierungsvorbereitung gesetzten Wandspannung auf einen Pegel (Vth2<Vw<Vth1) abfallen zu lassen, so dass in der folgenden Haltezeitspanne eine Entladung nicht wieder beginnen kann.

5. Verfahren nach einem der Ansprüche 2 bis 4, wobei die jeweiligen Potentiale der Abtastelektroden (Y1-Yn) in der Adressierungszeitspanne unabhängig voneinander gesteuert werden, um eine Wahl der Zeilen durchzuführen, und die Datenelektroden (A1-Am) entsprechend den der jeweils gewählten Zeile entsprechenden Zustandssetzdaten synchron zur Wahl der Zeilen wahlweise auf ein erstes Potential (Pa) oder ein zweites Potential (0) vorgespannt werden.

6. Verfahren nach einem der Ansprüche 2 bis 5, wobei solche ersten oder zweiten Entladungen in der Adressierungszeitspanne in allen Zellen einer gewählten Zeile gleichzeitig erzeugt werden.

7. Verfahren nach einem der Ansprüche 2 bis 6, wobei die vorbestimmte Abtastabfolge so gestaltet ist, dass Entladungen in den Zellen einer gegebenen Zeile in der Abfolge als Vorentladungen in mindestens den nächsten beiden Zeilen in der Abfolge nach der gegebenen Zeile wirksam werden.

8. Verfahren nach einem der Ansprüche 2 bis 7, wobei
die Zeilen des Panels in eine Gruppe ungeradzahliger Zeilen und eine Gruppe geradzahliger Zeilen unterteilt sind,
die Gruppe ungeradzahliger Zeilen in einer ersten solchen Adressierungszeitspanne (TA1) und die Gruppe geradzahliger Zeilen in einer von der ersten Adressierungszeitspanne verschiedenen zweiten solchen Adressierungszeitspanne (TA2) adressiert wird, und
zwischen der ersten und der zweiten Adressierungszeitspanne eine Spannung (Pra1, Prx1, Pry1, Pra2, Prx2, Pry2) an alle Zellen der Gruppe geradzahliger Zeilen angelegt wird, um Vorentladungen zu erzeugen.

9. Verfahren nach einem der Ansprüche 2 bis 7, wobei das Panel außerdem ein oder mehrere Paare Hilfselektroden (DX1, DY1, DX2, DY2) ähnlich den Abtastelektroden aufweist, die außerhalb des Panels in Spaltenrichtung angeordnet sind, und wobei das Verfahren außerdem aufweist:
Anlegen einer Spannung (Pp) an eine Hilfselektrode eines Paars unter den ein oder mehreren Paaren Hilfselektroden (DX1, DY1, DX2, DY2) in der Adressierungszeitspanne (Ta), um vor dem Wählen einer ersten Zeile (Y1) in der Abtastabfolge eine Vorentladung zu erzeugen, wobei das eine Paar der ersten Zeile am nächsten liegt.

10. Verfahren nach einem der Ansprüche 2 bis 7, wobei
das Panel außerdem ein oder mehrere Paare Hilfselektroden (DX1, DY1, DX2, DY2) ähnlich den Abtastelektroden aufweist, die außerhalb des Panels in Spaltenrichtung angeordnet sind,
die Zeilen des Panels in eine Gruppe ungeradzahliger Zeilen und eine Gruppe geradzahliger Zeilen unterteilt sind,
die Gruppe ungeradzahliger Zeilen in einer ersten solchen Adressierungszeitspanne (TA1) und die Gruppe geradzahliger Zeilen in einer von der ersten Adressierungszeitspanne verschiedenen zweiten solchen Adressierungszeitspanne (TA2) adressiert wird, und
zwischen der ersten und der zweiten Adressierungszeitspanne an eine Hilfselektrode eines Paars unter den ein oder mehreren Paaren Hilfselektroden (DX1, DY1, DX2, DY2), wobei das eine Paar der während der Abtastabfolge in der Gruppe geradzahliger Zeilen zuerst gewählten Zeile am nächsten liegt, eine Spannung (Pp) angelegt wird, um Vorentladungen zu erzeugen.

11. Verfahren nach Anspruch 3 oder 4, wobei die Adressierungsvorbereitung das Anlegen einer Spannung an eine Elektrodenlücke in der jeweiligen Zelle beinhaltet, wobei die angelegte Spannung von einem ersten vorbestimmten Wert monoton auf einen zweiten vorbestimmten Wert ansteigt, so dass die Wandspannung der betreffenden Elektrodenlücke durch Erzeugen mehrerer Entladungen oder einer kontinuierlichen Entladung in der Anstiegszeitspanne der Spannung eingestellt wird.

12. Gasentladungspanel mit Abtastelektroden (Y1-Yn), die jeweils seinen Zeilen entsprechen, und Datenelektroden (A1-Am), die jeweils seinen Spalten entsprechen, sowie mit Zellen, die unter Bildung einer Matrix jeweils an Kreuzungen der Abtastelektroden und der Datenelektroden angeordnet sind, und mit einer Ansteuerschaltung (80), die in einer Adressierungszeitspanne (TA) betreibbar ist, um die Zellen jeweils wahlweise entweder in einen zum Leuchten zu bringenden Zustand oder einen nicht zum Leuchten zu bringenden Zustand zu setzen, wobei das Setzen des Zustands durch Wählen von Zeilen einer nach der anderen in einer vorbestimmten Abtastabfolge unter Verwendung der jeweils den Zeilen entsprechenden Abtastelektroden und für jede solche gewählte Zeile durch Ansteuern der Datenelektroden entsprechend der betreffenden Zeile entsprechenden Zustandssetzdaten (Dsf) durchgeführt wird, und wobei die Ansteuerschaltung außerdem in einer Haltezeitspanne (TS) betreibbar ist, um lediglich in den in den zum Leuchten zu bringenden Zustand gesetzten Zellen gleichzeitig entsprechende Halteentladungen zu erzeugen,
**dadurch gekennzeichnet, dass**
die Ansteuerschaltung in der Adressierungszeitspanne betreibbar ist, um in allen Zellen der jeweils gewählten Zeile, einschließlich den in den zum Leuchten zu bringenden Zustand und den in den nicht zum Leuchten zu bringenden Zustand zu setzenden Zellen Entladungen zu erzeugen, und
die Ansteuerschaltung außerdem eingerichtet ist, die Intensität der Entladung in jeder Zelle einer gewählten Zeile in der Adressierungszeitspanne entsprechend den der betreffenden Zeile entsprechenden Zustandssetzdaten so zu setzen, dass die Intensitäten der Entladungen in Zellen der gewählten Zeile, die in einen der beiden Zustände gesetzt werden, stärker als die Intensitäten der Entladungen in Zellen der gewählten Zeile sind, die in den anderen der beiden Zustände gesetzt werden.

## Revendications

1. Procédé de commande d'un panneau d'affichage à décharge de gaz, le panneau d'affichage ayant des électrodes de balayage (Y1 ∼ Yn), correspondant respectivement à des rangées du panneau d'affichage, et des électrodes de données (A1 ∼ Am), correspondant respectivement à des colonnes du panneau d'affichage, et ayant également des cellules agencées respectivement au niveau d'intersections des électrodes de balayage et des électrodes de données de manière à former une matrice, et une période de commande (Tsf) du panneau d'affichage incluant une période d'adressage (TA), au cours de laquelle chacune des cellules est définie de manière sélective soit dans un état éclairé soit dans un état non éclairé, ce paramétrage d'états étant effectué en sélectionnant des rangées l'une après l'autre selon une séquence de balayage prédéterminée en utilisant les électrodes de balayage correspondant respectivement aux rangées et, pour chacune de ces rangées sélectionnées, et en commandant les électrodes de données conformément à des données de paramétrage d'états (Dsf) correspondant à la rangée concernée, ladite période de commande incluant également une période d'entretien (TS) au cours de laquelle des décharges d'entretien respectives sont générées simultanément uniquement dans les cellules qui ont été définies dans ledit état éclairé,
**caractérisé en ce que** :
lors de ladite période d'adressage, des décharges sont générées dans toutes les cellules de chaque rangée sélectionnée, incluant à la fois les cellules qui ont été définies dans l'état éclairé et dans l'état non éclairé, et
une intensité de la décharge dans chacune desdites cellules d'une rangée sélectionnée lors de ladite période d'adressage est définie conformément aux données de paramétrage d'états correspondant à la rangée concernée de sorte que les intensités des décharges dans des cellules de la rangée sélectionnée qui ont été définies dans l'un des deux états sont plus fortes que les intensités des décharges dans des cellules de la rangée sélectionnée qui ont été définies dans l'autre des deux états.

2. Procédé selon la revendication 1, dans lequel :
les électrodes de balayage (Y) et/ou les électrodes de données (A) sont recouvertes d'une couche diélectrique (17, 24) de sorte qu'une tension de paroi peut être générée au niveau d'un écart entre électrodes (AY, XY) dans chaque cellule,
un espace de décharge est continu sur une longueur entière de chaque colonne du panneau d'affichage, et
les données de paramétrage d'états correspondant à chaque rangée sélectionnée sont des données binaires,
le procédé comportant les étapes consistant à :
lors de ladite période d'adressage, commander les tensions de paroi (Vw) de toutes les cellules de chacune desdites rangées sélectionnées conformément auxdites données de paramétrage d'états en générant des décharges ayant des premières intensités dans des cellules de la rangée sélectionnée qui ont été définies dans l'un des deux états et en générant des décharges ayant des secondes intensités, différentes des premières intensités, dans des cellules de la rangée sélectionnée qui ont été définies dans l'autre des deux états, conformément aux données de paramétrage d'états correspondant aux cellules de la rangée sélectionnée, et
lors de ladite période d'entretien, appliquer une tension alternative (Ps) à toutes les cellules, de manière répétée.

3. Procédé selon la revendication 2, comportant en outre les étapes consistant à :
appliquer au moins une impulsion de préparation (Pra1, Prx1, Pry1, Pra2, Prx2, Pry2) à toutes les cellules de la rangée sélectionnée avant la période d'adressage de manière à effectuer une préparation d'adressage pour définir la tension de paroi (Vw) de chaque cellule à un niveau prédéterminé (Vw1), et
générer des décharges ayant lesdites premières intensités dans les cellules à définir dans ledit état éclairé lors de la période d'adressage de manière à amener le niveau de la tension de paroi définie dans chacune de ces cellules lors de l'accroissement de la préparation d'adressage à un niveau suffisant (Vw<Vth2) pour régénérer une décharge lors de la période d'entretien suivant ladite période d'adressage, et générer des décharges ayant lesdites secondes intensités dans les cellules à définir dans ledit état non éclairé lors de la période d'adressage de manière à amener le niveau de la tension de paroi définie dans chacune de ces cellules lors de la réduction de la préparation d'adressage à un niveau (Vth2<Vw<Vthl) de sorte que la décharge ne peut pas redémarrer lors de ladite période d'entretien suivante.

4. Procédé selon la revendication 2, comportant en outre les étapes consistant à :
appliquer au moins une impulsion de préparation (Pra1, Prx1, Pry1, Pra2, Prx2, Pry2) à toutes les cellules de la rangée sélectionnée avant la période d'adressage de manière à effectuer une préparation d'adressage pour définir la tension de paroi (Vw) de chaque cellule à un niveau prédéterminé (Vw2), et
générer des décharges ayant lesdites premières intensités dans les cellules à définir dans ledit état éclairé lors de la période d'adressage de manière à amener le niveau de la tension de paroi définie dans chacune de ces cellules lors de l'accroissement de la préparation d'adressage à un niveau suffisant (Vw<Vth1) pour régénérer une décharge lors de la période d'entretien suivant ladite période d'adressage, et générer des décharges ayant lesdites secondes intensités dans les cellules à définir dans ledit état non éclairé lors de la période d'adressage de manière à amener le niveau de la tension de paroi définie dans chacune de ces cellules lors de la réduction de la préparation d'adressage à un niveau (Vth2<Vw<Vth1) de sorte que la décharge ne peut pas redémarrer lors de ladite période d'entretien suivante.

5. Procédé selon l'une quelconque des revendications 2 à 4, dans lequel lors de la période d'adressage des potentiels respectifs des électrodes de balayage (Y1 ∼ Yn) sont commandés indépendamment les uns des autres pour effectuer une sélection de rangées, et les électrodes de données (A1 ∼ Am) sont polarisées de manière sélective à un premier potentiel (Pa) ou à un second potentiel (0) conformément auxdites données de paramétrage d'états correspondant à chaque rangée sélectionnée en synchronisme avec la sélection de rangées.

6. Procédé selon l'une quelconque des revendications 2 à 5, dans lequel ces premières décharges ou ces secondes décharges sont générées simultanément dans toutes les cellules d'une rangée sélectionnée lors de la période d'adressage.

7. Procédé selon l'une quelconque des revendications 2 à 6, dans lequel la séquence de balayage prédéterminé est telle que les décharges dans les cellules d'une rangée de données dans la séquence deviennent efficaces en tant que décharges primaires dans au moins les deux rangées suivantes de la séquence après la rangée donnée.

8. Procédé selon l'une quelconque des revendications 2 à 7, dans lequel :
les rangées du panneau sont subdivisées en un groupe de rangées impaires et en un groupe de rangées paires,
le groupe de rangées impaires est adressé lors d'une première période d'adressage (TA1) et le groupe de rangées paires est adressé lors d'une seconde période d'adressage (TA2) différente de ladite première période d'adressage, et
une tension (Pra1, Prx1, Pry1, Pra2, Prx2, Pry2) est appliquée à toutes les cellules du groupe de rangées paires entre les première et seconde périodes d'adressage de manière à générer des décharges primaires.

9. Procédé selon l'une quelconque des revendications 2 à 7, dans lequel le panneau d'affichage a également une paire unique ou une pluralité de paires d'électrodes auxiliaires (DX1, DY1, DX2, DY2), similaires aux électrodes de balayage, agencées à l'extérieur du panneau d'affichage dans la direction de colonne, et le procédé comporte en outre l'étape consistant à :
appliquer une tension (Pp) à une électrode auxiliaire d'une paire parmi ladite paire unique ou ladite pluralité de paires d'électrodes auxiliaires (DX1, DY1, DX2, DY2) lors de la période d'adressage (Ta) pour générer des décharges primaires avant qu'une première rangée (Y1) ne soit sélectionnée lors de ladite séquence de balayage, ladite une paire étant la plus proche de ladite première rangée.

10. Procédé selon l'une quelconque des revendications 2 à 7, dans lequel :
le panneau d'affichage a également une paire unique ou une pluralité de paires d'électrodes auxiliaires (DX1, DY1, DX2, DY2), similaires aux électrodes de balayage, agencées à l'extérieur du panneau d'affichage dans la direction de colonne,
les rangées du panneau sont subdivisées en un groupe de rangées impaires et en un groupe de rangées paires,
le groupe de rangées impaires est adressé lors d'une première période d'adressage (TA1) et le groupe de rangées paires est adressé lors d'une seconde période d'adressage (TA2) différente de ladite première période d'adressage, et
entre lesdites première et seconde périodes d'adressage, une tension (Pp) est appliquée à une électrode auxiliaire d'une paire parmi ladite paire unique ou ladite pluralité de paires d'électrodes auxiliaires (DX1, DY1, DX2, DY2), ladite une paire étant la plus proche d'une rangée qui est sélectionnée en premier dans le groupe de rangées paires, pendant ladite séquence de balayage, de manière à générer des décharges primaires.

11. Procédé selon la revendication 3 ou 4, dans lequel ladite préparation d'adressage comporte l'étape consistant à appliquer une tension à un écart entre électrodes dans chacune desdites cellules, la tension appliquait croissant à partir d'une première valeur prédéterminée jusqu'à une seconde valeur prédéterminée, de manière à régler la tension de paroi de l'écart entre électrodes concerné en générant plusieurs décharges ou une décharge continue lors de la période de montée de la tension.

12. Panneau d'affichage à décharge de gaz, ayant des électrodes de balayage (Y1 ∼ Yn), correspondant respectivement à des rangées du panneau d'affichage, et des électrodes de données (A1 ∼ Am), correspondant respectivement à des colonnes du panneau d'affichage, et ayant également des cellules agencées respectivement au niveau d'intersections des électrodes de balayage et des électrodes de données de manière à former une matrice, et ayant également un circuit de commande (80) opérationnel, lors d'une période d'adressage (TA), pour amener chacune des cellules à être définie de manière sélective soit dans un état éclairé soit dans un état non éclairé, ce paramétrage d'états étant effectué en sélectionnant des rangées l'une après l'autre selon une séquence de balayage prédéterminée en utilisant les électrodes de balayage correspondant respectivement aux rangées et, pour chacune de ces rangées sélectionnées, en commandant les électrodes de données conformément aux données de paramétrage d'états (Dsf) correspondant à la rangée concernée, ledit circuit de commande étant en outre opérationnel, lors d'une période d'entretien (TS), pour engendrer la génération de décharges d'entretien respectives simultanément uniquement dans les cellules qui ont été définies dans ledit état éclairé,
**caractérisé en ce que** :
le circuit de commande est opérationnel, lors de ladite période d'adressage, pour générer des décharges dans toutes les cellules de chaque rangée sélectionnée, incluant à la fois les cellules qui ont été définies dans l'état éclairé et dans l'état non éclairé, et
le circuit de commande est en outre opérationnelle pour définir une intensité de la décharge dans chacune desdites cellules d'une rangée sélectionnée lors de ladite période d'adressage conformément aux données de paramétrage d'états correspondant à la rangée concernée de sorte que les intensités des décharges dans des cellules de la rangée sélectionnée qui ont été définies dans l'un des deux états sont plus fortes que les intensités des décharges dans des cellules de la rangée sélectionnée qui ont été définies dans l'autre des deux états.
